# EUROPEAN PATENT APPLICATION

(11) **EP 3 135 451 A1**
(43) Date of publication of application: **01.03.2017**
(21) Application number: 16183928.7
(22) Date of filing: 12.08.2016
(51) Int. Cl.: B29C 45/14, F16C 41/00, G01P 3/44, G01P 3/487, C09J 5/06

(54) **MANUFACTURING METHOD OF A PROTECTIVE COVER FOR A BEARING DEVICE HAVING A SENSOR HOLDER PART**

(30) Priority: 31.08.2015 JP 2015170340
(71) Applicant: Nakanishi Metal Works Co., Ltd., Osaka-shi Osaka 530-8566 (JP)
(72) Inventor: FUKUDA, Osamu, Osaka, 530-8566 (JP); NARAZAKI, Yasuhiro, Osaka, 530-8566 (JP)
(74) Representative: Vossius & Partner Patentanwälte Rechtsanwälte mbB

(57) **Abstract**

The present invention is intended to provide a manufacturing method of a protective cover having a sensor holder part that has high adhesion strength between a metallic component (1A) and a plastic component and maintains high reliability over a long period of time.

The manufacturing method includes: a step of applying a thermoset resin adhesive to a surface of a metallic component (1A) including a joining surface relative to a plastic component; a drying and solidification step of evaporating a solvent contained in the adhesive under a temperature condition at a temperature lower than a temperature at which the adhesive starts a cross-linking reaction; and an injection molding step of placing the metallic component (1A) as an insert between dies (18) and (19) and injecting a molten plastic material from a gate (20) into the cavity.

## Description

### Technical Field

The present invention relates to a manufacturing method of a protective cover that is press-fitted into an outer ring of a bearing to cover a magnetic encoder and has a sensor holder part holding a magnetic sensor opposed to the magnetic encoder.

### Background Art

An antilock brake system widely used in automobiles for efficient and safety braking without locking of wheels detects the rotation speeds of wheels by a rotation speed detector (wheel speed sensor), calculates the acceleration and the deceleration and estimates the vehicle speed and the slip ratio by a controller, and drives an actuator to control the brake fluid pressure based on the calculation and estimation results, for example.

Bearing devices including such a rotation speed detector in a roller bearing for supporting automobile wheels (hub bearing) are also widely used. Such a bearing device may be structured such that a magnetic encoder having N poles and S poles alternately arranged at constant intervals in the circumferential direction is fitted to the inner ring of a bearing, a magnetic sensor for detecting the rotation of the magnetic encoder is attached to the outer ring of the bearing so as to be opposed to the magnetic encoder, and a protective cover covering the magnetic encoder from the inner side to protect the magnetic encoder is press-fitted into the inner end portion of the outer ring (for example, refer to Patent Document 1).

The protective cover keeps the magnetic encoder from being hit by pebbles, mud water, or the like and prevents damage to the magnetic encoder. In addition, the protective cover eliminates the need for a seal member on the outer side of the magnetic encoder, which decreases a sliding resistance to reduce rotation torque of the bearing device.

In addition, to eliminate a troublesome work of adjusting the air gap between the magnetic encoder and the magnetic sensor, the protective cover having the sensor holder part for holding the magnetic sensor may be configured such that a boss part composed of a synthetic resin is integrally joined to part of the bottom of a cap formed in a cup shape by press working on a non-magnetic steel plate, and a nut is integrally joined to the boss part to fix the magnetic sensor (for example, refer to Patent Document 2).

Further, the protective cover having the sensor holder part may be formed by joining a metallic cylindrical member and a synthetic resin member into a cup shape with an adhesive (for example, refer to Patent Document 3).

The protective cover having the sensor holder part as described in Patent Documents 2 and 3 is composed of a metallic component and a plastic component that are generally joined by adhesion.

The protective covers with the sensor holder parts described in Patent Documents 2 and 3 are manufactured by insert molding according to the following procedure (for example, refer to Patent Document 3):
(1) Apply a thermoset resin adhesive to the surface (surface portion including a joinning surface relative to the boss part and the synthetic resin material) of the metallic cap as the metallic component in Patent Document 2 or the metallic cylindrical member in Patent Document 3.
(2) Bake the adhesive material into a semi-cured state.
(3) Set the metallic component as an insert in an injection molding die and injecting a molten plastic material into the molding die for injection molding.
(4) Perform thermal curing treatment (secondary heating) to bring the adhesive into a fully cured state.

### Citation List

### Patent Literature

Patent Document 1: JP-A No. 2011-084265
Patent Document 2: JP-A No. 2013-117455
Patent Document 3: JP-A No. 2013-177928

### Summary of Invention

When the thermoset resin adhesive applied to the surface of the metallic component as an insert is brought into the semi-cured state, the resin is cured to some degree due to cross-linking reaction before contact with the molten plastic material and the reaction groups in the adhesive for joining with the molten plastic material decrease. Accordingly, the joining force of the adhesive and the plastic becomes weak with reduction in adhesion strength. In addition, when the adhesive is cured due to excessive cross-linking reaction resulting from variations in drying temperature and drying time, most of the remaining reaction groups decrease. This may lead to a sudden joining failure.

In view of the foregoing circumstances, an object of the present invention is to provide a manufacturing method of a protective cover having a sensor holder part that has high adhesion strength between a metallic component and a plastic component and maintains high reliability over a long period.

To solve the foregoing problem, a manufacturing method of a protective cover having a sensor holder part according to the present invention is a manufacturing method of a protective cover for use in a bearing device including: an inner ring with an inner ring track surface on an outer peripheral surface; an outer ring with an outer ring track surface on an inner peripheral surface; a bearing having a rolling element rolling between the inner ring track surface and the outer ring track surface; a magnetic encoder that is positioned at one axial end of the bearing, fixed to the inner ring, and has N and S poles alternately arranged at regular intervals in an circumferential direction; and a magnetic sensor that is opposed to the magnetic poles of the magnetic encoder to detect rotation of the magnetic encoder, the protective cover having a metallic component press-fitted into the outer ring and a plastic component forming a sensor holder part holding the magnetic sensor, wherein the manufacturing method comprises: an adhesive application step of applying a thermoset resin adhesive to a surface of the metallic component including a joining surface relative to the plastic component; a natural drying step of evaporating a solvent contained in the adhesive by natural drying or a drying and solidification step of evaporating the solvent contained in the adhesive under a temperature condition at a temperature lower than a temperature at which the adhesive starts cross-linking reaction; an injection molding step of placing the metallic component having undergone the natural drying step or the drying and solidification step as an insert in an injection molding die and injecting a molten material for the plastic component from a gate into a cavity of the molding die; and a thermal curing step of applying thermal curing treatment to the adhesive at a temperature equal to or higher than the temperature at which the adhesive starts cross-linking reaction.

According to the manufacturing method, the injection molding step is performed without bringing the thermoset resin adhesive into the semi-cured state in which it is hard to control the heating temperature and the heating time and the adhesive becomes unstable. Accordingly, it is possible to reduce variations in adhesion strength between the metallic component and the plastic component in the protective cover having the sensor holder part.

Moreover, the adhesive is not cured due to cross-linking reaction before contact with the molten material for the plastic component in the injection molding step, and the joining force of the adhesive and the plastic component is not weaken. This improves the adhesion strength of the metallic component and the plastic component.

### Advantageous Effects of Invention

According to the manufacturing method for the protective cover having the sensor holder part of the present invention, it is possible to produce advantageous effects of obtaining high adhesion strength between the metallic component and the plastic component and maintaining high reliability over a long period of time in the protective cover having the sensor holder part manufactured by insert molding.

### Brief Description of Drawings

Fig. 1 is a partial vertical cross-sectional view of a bearing device including a protective cover having a sensor holder part;
Fig. 2 is a perspective vertical cross-sectional view of the protective cover having the sensor holder part to which the magnetic sensor is attached;
Fig. 3 is a vertical cross-sectional view showing an application range of a thermoset resin adhesive on a cap part in which the thickness of the thermoset resin adhesive is exaggerated for the sake of visibility of the drawing;
Fig. 4 is a vertical cross-sectional view of an example of an injection molding die;
Fig. 5 is a partial vertical cross-sectional view of a protective cover having a sensor holder part in another embodiment to which a magnetic sensor is attached;
Fig. 6 is a perspective vertical cross-sectional view of a protective cover having a sensor holder part in another embodiment to which a magnetic sensor is attached;
Fig. 7 is a perspective vertical cross-sectional view of a protective cover having a sensor holder part in another embodiment to which a magnetic sensor is attached;
Fig. 8 is a perspective vertical cross-sectional view of a protective cover having a sensor holder part in another embodiment to which a magnetic sensor is attached;
Fig. 9 is a perspective vertical cross-sectional view of a protective cover having a sensor holder part in another embodiment to which a magnetic sensor is attached;
Fig. 10 is a schematic perspective view of a Dumbbell test specimen for adhesion strength evaluation; and
Fig. 11 is a graph that illustrates test results showing the relationship between the drying temperature and the separation strength using the Dumbbell test specimen for adhesion strength evaluation illustrated in Fig. 10, and separation strength test results using the Dumbbell test specimen in which thermal curing treatment was applied to a thermoset resin adhesive layer at a temperature equal to or higher than a cross-linking reaction start temperature (150°C) to occur cross-linking reaction and curing reaction.

### Description of Embodiments

Next, embodiments of the present invention will be described in detail with reference to the accompanying drawings. However, the present invention is not limited to the embodiments illustrated in the accompanying drawings but includes any other embodiments satisfying the requirements described in the claims.

### <Bearing device>

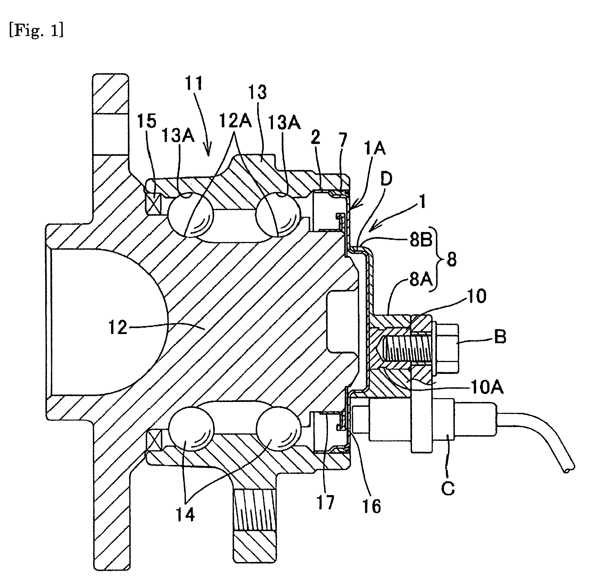

A bearing device 11 according to a first embodiment of the present invention illustrated in the partial vertical cross-sectional view of Fig. 1 includes a bearing with an inner ring 12 rotating relative to an outer ring 13, a magnetic encoder 16, a protective cover 1, and a magnetic sensor C arranged at one axial end of the bearing, and a seal member 15 arranged at the other axial end of the bearing, and others.

The bearing has the inner ring 12 with an inner ring track surface 12A on the outer peripheral surface, the outer ring 13 with an outer ring track surface 13A on the inner peripheral surface, and rolling elements 14, 14, ... rolling between the inner ring track surface 12A and the outer ring track surface 13A, and others.

The magnetic encoder 16 has N and S poles alternately arranged at regular intervals in the circumferential direction, and is fixed to the inner ring 12 by a support member 17 positioned at the one axial end of the bearing.

The protective cover 1 is attached to the outer ring 13 to seal the one axial end of the bearing and has a sensor holder part 8 holding the magnetic sensor C.

The sensor holder part 8 has a base portion 8A holding the nut 10 and a step covering portion 8B covering the step D.

The magnetic sensor C attached to the sensor holder part 8 of the protective cover 1 is opposed to the magnetic encoder 16 to detect the rotation of the magnetic encoder 16.

In the bearing device 11 illustrated in Fig. 1, the protective cover 1 is press-fitted into the outer ring 13 of the bearing in which the magnetic encoder 16 is fixed to the inner ring 12, whereby the protective cover 1 is axially positioned with respect to the magnetic encoder 16, and the magnetic sensor C is axially positioned and held with respect to the protective cover 1 by the sensor holder part 8 of the protective cover 1. Accordingly, an air gap between the magnetic sensor C and the magnetic encoder 16 is completely adjusted.

This eliminates a troublesome work of adjusting the air gap between the magnetic encoder 16 and the magnetic sensor C.

### <Protective cover>

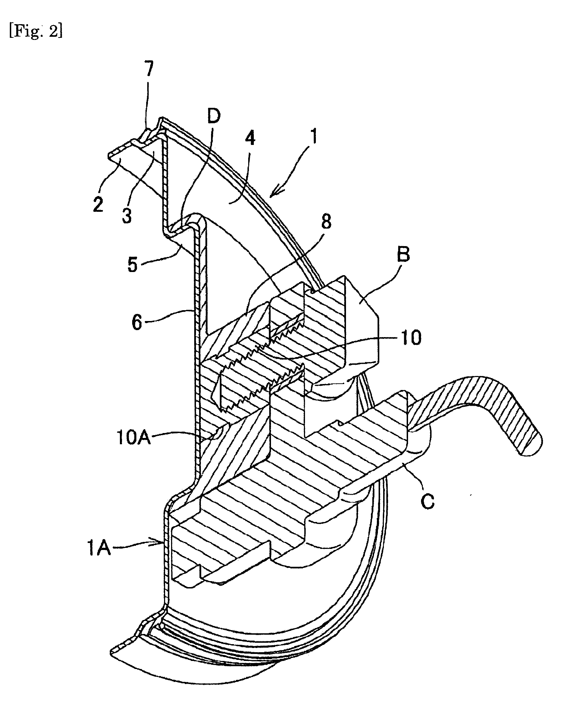

As illustrated in the partial vertical cross-sectional view of Fig. 1 and the perspective vertical cross-sectional view of Fig. 2, the protective cover 1 has the cap part 1A and the nut 10 as a metallic component, a seal body 7 as an elastic component, and the sensor holder part 8 as a plastic component, and an adhesive intervenes between the cap part 1A and the sensor holder part 8.

The protective cover 1 is an insert molded article that is formed with the cap part 1A and the nut 10 as inserts.

Accordingly, the sensor holder part 8 is integrated by insert molding with the cap part 1A and the nut 10.

The cap part 1A is a metallic component formed in a cup shape by pressing a non-magnetic steel plate, and is positioned at one axial end portion of the bearing and is press-fitted into the outer ring 13.

The cap part 1A includes: a first cylindrical portion 2 that is press-fitted into the outer ring 13; a second cylindrical portion 3 that is smaller in diameter than the first cylindrical portion 2, connects to an end edge of the first cylindrical portion 2, and has an outer peripheral surface to which the seal body 7 is vulcanized and adhered; an annular portion 4 that connects to an end edge of the second cylindrical portion 3 and extends radially inward; a third cylindrical portion 5 that connects to an inner-side end edge of the annular portion 4 and extends axially; and a disc portion 6 that connects to an end edge of the third cylindrical portion 5.

The disc portion 6 is a bottommost portion of the cap part 1A, and the disc portion 6 and the third cylindrical portion 5 extending axially from an outer edge of the disc portion 6 forms a step D.

The seal body 7 is an elastic component formed from a synthetic rubber or the like. The synthetic rubbers for forming the seal body 7 can be one of rubbers such as nitrile rubber (NBR), hydrogenated nitrile rubber (HNBR), acrylic rubber (ACM), ethylene-acrylic rubber (AEM), fluorine rubber (FKM or FPM), and silicone rubber (VQM) or an appropriate blend of two or more of these rubbers.

The sensor holder part 8 is a plastic component that holds the nut 10 screwed by an attachment bolt B for attachment of the magnetic sensor C.

The plastic for forming the sensor holder part 8 is preferably any of polyamide resins such as aliphatic polyamide resins including polyamide 6, polyamide 66, polyamide 46, polyamide 11, polyamide 12, polyamide 610, and polyamide 612, or aromatic polyamide resins including polyamide 9T, polyamide 6T, and polyamide MXD6.

The adhesive intervening between the cap part 1A and the sensor holder part 8 is a thermoset resin adhesive. The thermoset resin adhesive for use in the present invention may be a phenol resin adhesive, an epoxy resin adhesive, or the like, for example.

The phenol resin adhesive may be formed by dissolving a novolac-type phenol resin or a resol-type phenol resin, and a curing agent such as hexamethylenetetramine in a solvent such as methanol or methyl ethyl ketone, for example. In addition, the adhesive may be mixed with a novolac-type epoxy resin to improve adhesiveness.

The epoxy resin adhesive may be a one-component epoxy adhesive as a liquid concentrate capable of being diluted with a solvent. The one-component epoxy adhesive is composed of an epoxy resin and a curing agent. The one-component epoxy adhesive may be further mixed as necessary with another epoxy compound for use as a reactive diluent, a curing accelerator for improving the thermal curing rate, an inorganic filler effective in improving heat resistance and curing distortion resistance, a cross-linking rubber fine particles for improving flexibility resulting in deformation under stress, and the like.

The epoxy resin may be a bisphenol A-type epoxy resin, a bisphenol F-type epoxy resin, a bisphenol AD-type epoxy resin, a naphthalene-type epoxy resin, a biphenyl-type epoxy resin, a glycidyl amine-type epoxy resin, an alicyclic epoxy resin, a dicyclopentadiene-type epoxy resin, a phenol novolac-type epoxy resin, a polyester-modified epoxy resin, a silicon-modified epoxy resin, or the like, for example, although there is no particular limitation.

The curing agent may be any of amine-based curing agents such as an aliphatic amine, an alicyclic amine, and an aromatic amine; polyamide-based curing agents; acid anhydride-based curing agents such as phthalic anhydride, methyltetrahydrophthalic anhydride, endo methylene-tetra-hydro phthalic anhydride, methyl endo methylene tetrahydrophthalic anhydride, methylhexahydrophthalic anhydride, or trimellitic anhydride; secondary or tertiary amines; imidazoles; 1,3-bis(hydrazinocarboethyl)-5-isopropylhydantoin; eicosanedioic acid dihydrazide; adipic acid dihydrazide; dicyandiamide; and 7,11-octadecadiene-1,18-dicarbohydrazide, for example, although there is no particular limitation.

The reactive dilution agent may be alkyl monoglycidyl ether, alkyl diglycidyl ether, alkylphenol monoglycidyl ether, or the like, for example. Specifically, the reactive dilution agent may be 2-ethylhexyl glycidyl ether, allyl glycidyl ether, phenyl glycidyl ether, t-butyl phenyl glycidyl ether, or the like, although there is no particular limitation.

The curing accelerator is used to increase the rate of curing reaction in the case of using a curing agent such as acid anhydride or dicyandiamide. The curing accelerator may be any of imidazole compounds such as 1-cyanoethyl-2-ethyl-4-methylimidazole, 2-methylimidazole, 2-ethyl-4-methylimidazole, 2-undecylimidazole, and 2-phenylimidazole; carboxylic acids such as adipic acid; tertiary amines or tertiary amine salts such as dimethylbenzylamine and tris (dimethylaminomethyl) phenol; phosphines or phosphonium salts such as triphenylphosphine and tetraphenylphosphonium tetraphenyl borate; quaternary ammonium salts such as tetrabutylammonium bromide; and alkyl ureas such as 3-(3',4'-dichlorophenyl)-1,1-dimethyl urea, for example, although there is no particular limitation.

The inorganic filler may be molten silica powder, crystalline silica, quartz glass powder, crystalline glass powder, glass fiber, alumina powder, talc, mica, aluminum powder, titanium oxide, silica titania, boron nitride, aluminum nitride, silicon nitride, magnesia, or magnesium silicate, for example. They may be used singly or in combination of two or more.

The cross-linking rubber fine particle may be formed from vulcanized acrylonitrile-butadiene rubber, acrylic rubber, silicone rubber, urethane rubber, or the like having a carboxyl group in molecular chain, for example. The diameter of the cross-linking rubber fine particle may be 1 µm or less on the average, preferably about 30 to 200 nm as ultrafine particles, for example, although there is no particular limitation.

The solvent contained in the epoxy resin adhesive may be any of aromatic hydrocarbons such as toluene and xylene, a mixture of the aromatic hydrocarbon and ketones and alcohols, and naphthenic hydrocarbons such as cyclohexane, for example, although there is no particular limitation.

### <A manufacturing method of a protective cover having a sensor holder part>

A manufacturing method of a protective cover having a sensor holder part according to the embodiment is a manufacturing method for the protective cover 1 having the cap part 1A as a metallic component press-fitted into the outer ring 13 and a plastic component forming the sensor holder part 8 holding the magnetic sensor C in a bearing device 11 illustrated in Fig. 1, wherein the manufacturing method including: an adhesive application step of applying a thermoset resin adhesive to a surface of the metallic component (the cap part 1A) including a joining surface relative to the plastic component (the sensor holder part 8); a natural drying step of evaporating a solvent contained in the adhesive by natural drying or a drying and solidification step of evaporating the solvent contained in the adhesive under a temperature condition at a temperature lower than a temperature at which the adhesive starts cross-linking reaction; an injection molding step of placing the metallic component having undergone the natural drying step or the drying and solidification step as an insert in an injection molding die and injecting a molten material for the plastic component from a gate into a cavity of the molding die; and a thermal curing step of applying thermal curing treatment to the adhesive at a temperature equal to or higher than the temperature at which the adhesive starts cross-linking reaction.

### (Adhesive application step)

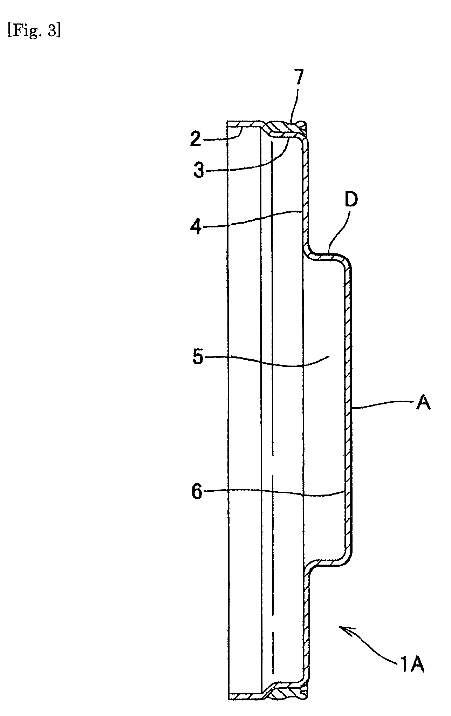

At this step, as illustrated in the vertical cross-sectional view of Fig. 3, a thermoset resin adhesive A is applied to the surface of the cap part 1A in which the seal body 7 is vulcanized and adhered to the outer peripheral surface of the second cylindrical portion 3 including the joining surface relative to the sensor holder part 8 illustrated in Fig. 2.

As a method of applying the thermoset resin adhesive A to the surface of the cap part 1A including the joining surface relative to the sensor holder part 8, the adhesive A may be applied to part of the surface of the cap part 1A (including the joining surface) using a brush, a roller, a spray, or the like.

Alternatively, the surface of the cap part 1A may be immersed in the liquid thermoset resin adhesive A. Taking molding die contamination into consideration, however, it is preferred to apply the adhesive A to part of the surface of the cap part 1A (including the joining surface) so as not to extend beyond the joining surface relative to the sensor holder part 8, if possible.

As for temperature conditions for applying the thermoset resin adhesive A to the cap part 1A, the temperature needs to cause no solidification or cross-linking curing reaction of the adhesive A, and may be room temperature, for example, although there is no particular limitation.

The thickness or resin amount of the adhesive A to be applied to the cap part 1A needs to be sufficient for adhesion and fixation to the sensor holder part 8, although there is no particular limitation.

The surface of the cap part 1A to which the adhesive A is applied is preferably subjected to roughening treatment or primer treatment from the viewpoint of improvement of an anchoring effect on the adhesive A.

The roughening treatment may be blasting, chemical etching, chemical conversion, hairline processing, or the like.

The roughness of the application surface of the cap part 1A having undergone the roughening treatment preferably falls within a range of Ra 0.5 to 2 µm.

The roughness of the application surface can be measured under JIS B0601-1994.

The primer may be a silane-based primer, a phenol-based primer, an epoxy-based primer, or the like.

### (Natural drying step)

At this step, the adhesive A applied to the surface of the cap part 1A at the adhesive application step is naturally dried at room temperature to volatilize the solvent contained in the adhesive A.

### (Drying and solidification step)

At this step, the adhesive A applied to the surface of the cap part 1A at the adhesive application step is placed under a temperature condition at a temperature lower than the temperature at which the adhesive A starts cross-linking reaction to volatilize the solvent contained in the adhesive, and dry and fix the adhesive A to the surface of the cap part 1A.

The adhesive A has the property of starting cross-linking reaction and becoming cured when being heated to a predetermined temperature. Accordingly, in the present invention, the temperature at which the adhesive A starts cross-linking reaction and begins curing refers to "temperature at which the thermoset resin adhesive starts cross-linking reaction."

The "drying and solidification" of the adhesive A here refers to the state before the start of cross-linking reaction by heating, in which the solvent contained in the applied adhesive A is volatilized and the ingredients of the adhesive A are solidified.

There is no particular limitation on the degree of evaporation of the solvent at the time of drying and solidification. The solvent may be volatilized to the degree at which, when the surface of the applied adhesive A is directly touched with fingers, the adhesive A does not stick to the fingers, or to the degree that the solvent hardly remains. In particular, from the viewpoint of ease of adhesion to the plastic, the adhesive A is preferably dried and solidified to the degree that the solvent hardly remains. The applied adhesive A changes lightly in color as being dried, and the degree of the drying and solidification can be checked by observing visually the state of color change.

The adhesive A needs to be dried and solidified at a temperature lower than the temperature at which the adhesive A starts cross-linking reaction. The specific temperature for the drying and solidification can be decided as appropriate depending on the used adhesive A. For example, in the case of using a phenol resin adhesive, the temperature is desirably adjusted to be lower than 110°C, preferably 25 to 105°C, from the viewpoint of short-time drying and solidification.

Alternatively, the adhesive A may be dried and solidified with temperature increases in plural stages starting from a predetermined temperature, from the viewpoint of efficient drying and solidification.

In this case, there is no particular limitation on the difference between the first temperature and the second temperature, or the like.

The time of drying and solidification can be decided as appropriate depending on the temperature of drying and solidification as far as the solvent in the adhesive A can be evaporated to solidify the solid content of the thermoset resin. For example, the time of drying and solidification is preferably adjusted to 30 to 60 minutes or more from the viewpoint of stable drying and solidification at an industrial level.

As a means for drying and solidification, for example, there is a method by which a gas adjusted to a predetermined temperature is blown onto the surface of the adhesive A applied to the cap part 1A. In addition, there is another method by which the cap part 1A with the adhesive A is left at rest at a predetermined temperature under reduced-pressure environment or is left at rest in a room at a predetermined adjusted temperature. The foregoing methods may be used in combination.

In the present invention, the adhesive A is dried and solidified at a temperature lower than the temperature at which the adhesive A starts cross-linking reaction, which eliminates the need for semi-curing in which it is difficult to control the heating temperature and time. In addition, the joining force between the adhesive A and the plastic component can be enhanced by suppressing the decrease of reaction groups in the adhesive A for joining with the plastic material.

### (Injection molding step)

The cap part 1A as an insert having undergone the adhesive application step and the natural drying step or the drying and solidification step is used.

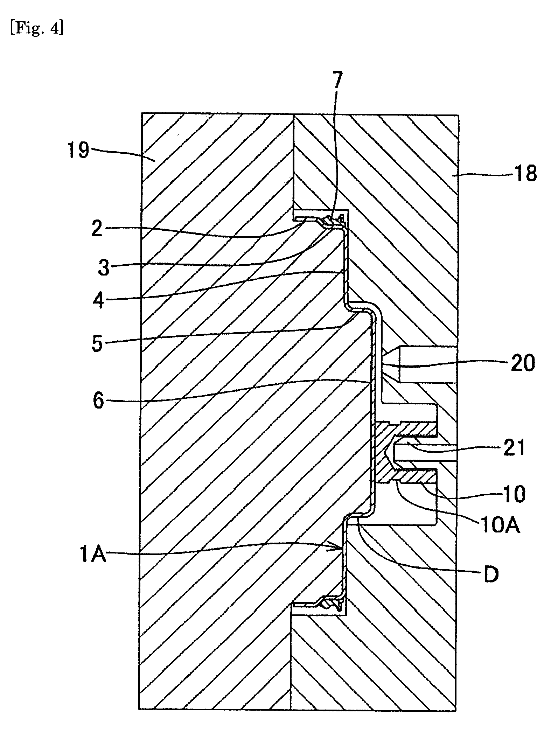

At this step, the nut 10 is set as an insert in a support shaft 21 of a fixed die 18 and the cap part 1A as an insert is set in a movable die 19 as illustrated in the vertical cross-sectional view of Fig. 4.

Next, the fixed die 18 and the movable die 19 are mounted and clamped in an injection molding machine, and a molten plastic material for forming the sensor holder part 8 is injected from a sprue through a gate 20 into cavities of the fixed die 18 and the movable die 19.

Then, the molten plastic material is cooled and solidified, and the movable die 19 is opened to remove the protective cover 1.

In the protective cover 1 formed by insert molding as described above (see Figs. 1 and 2), the synthetic resin is entered into a peripheral groove 10A of the nut 10 to retain the nut 10.

### (Thermal curing treatment method)

At this step, the protective cover 1 obtained at the injection molding step is subjected to thermal curing treatment at a temperature equal to or higher than the temperature at which the thermoset resin adhesive A starts cross-linking reaction.

The temperature equal to or higher than the temperature at which the adhesive starts cross-linking reaction falls within a range of 110 to 180°C, for example.

The thermal curing treatment may be performed with temperature increases in stages. For example, the first temperature may be adjusted within a range of 110 to 140°C, and the second temperature may be adjusted within a range of 140 to 180°C. The upper limit of the temperature equal to or higher than the cross-linking reaction starting temperature may be higher than 180°C from the viewpoint of shortening the treatment time.

After the foregoing steps, the protective cover 1 is completed.

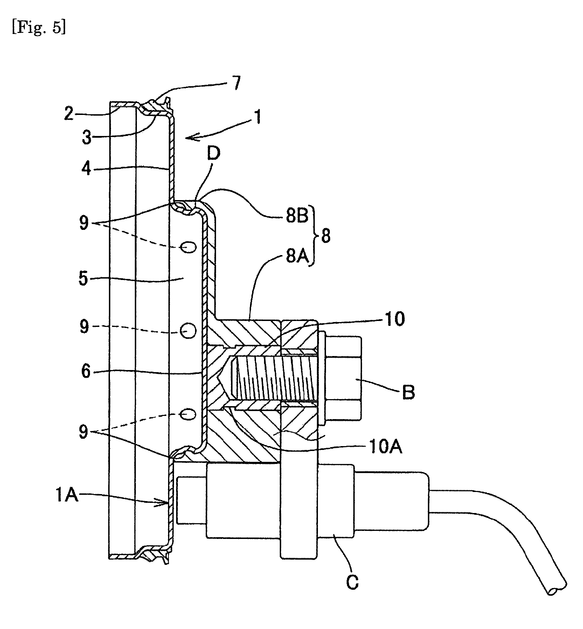

In the protective cover 1 described above as illustrated in the partial vertical cross-sectional view of Fig. 1 and the perspective vertical cross-sectional view of Fig. 2, concave portions 9, 9, ... may be formed in the outer peripheral surface of the third cylindrical portion 5 of the cap part 1A as illustrated in the partial vertical cross-sectional view of Fig. 5.

By forming the cap part 1A in such a shape, the plastic of the step covering portion 8B in the sensor holder part 8 enters into the concave portions 9, 9, ... to bring the cap part 1A and the sensor holder part 8 into mechanical bonding. This leads to improvement in the joint strength between the cap part 1A as the metallic component and the sensor holder part 8 as the plastic component.

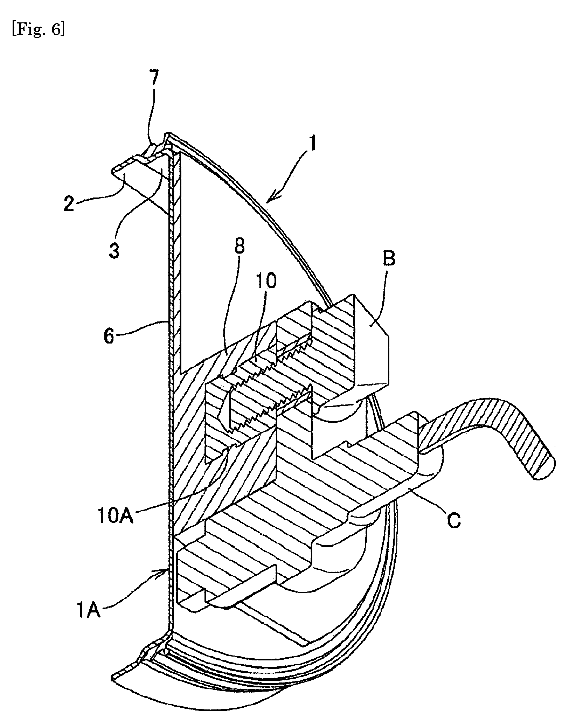

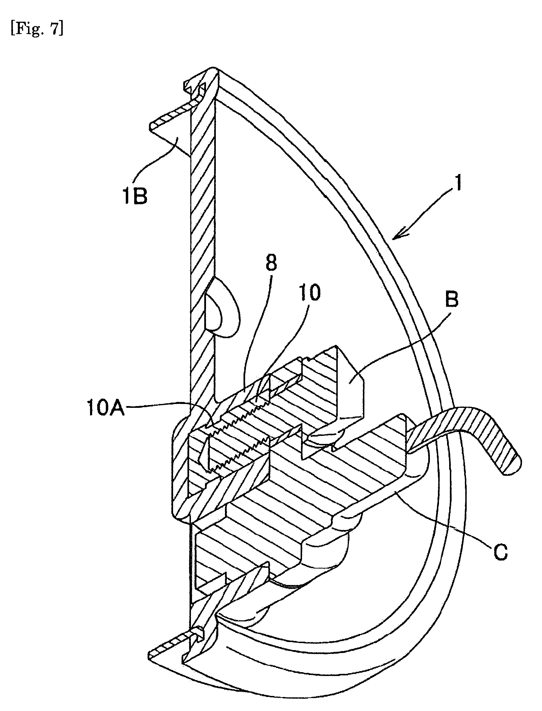

In addition, the protective cover 1 may be configured without the step D of the cap part 1A and the step covering portion 8B of the sensor holder part 8 in the perspective vertical cross-sectional view of Fig. 2 as illustrated in the perspective vertical cross-sectional view of Fig. 6, or the protective cover 1 may be configured with a cylindrical part 1B instead of the cap part 1A as the metallic component as illustrated in the perspective vertical cross-sectional view of Fig. 7.

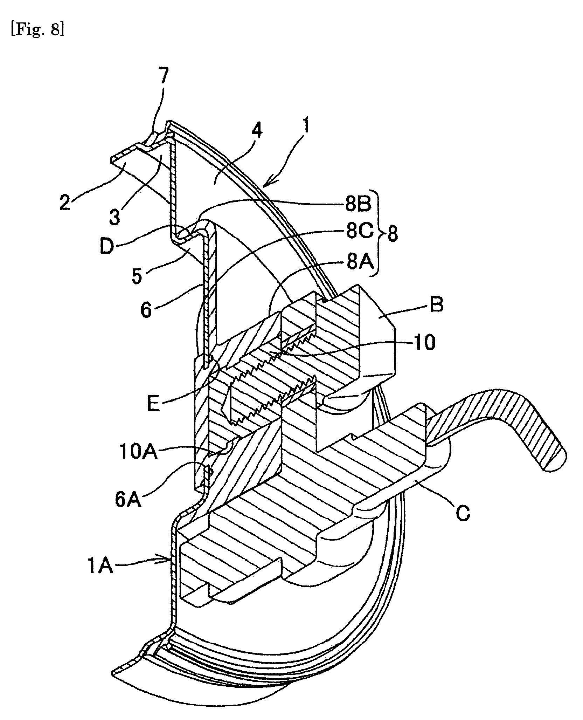

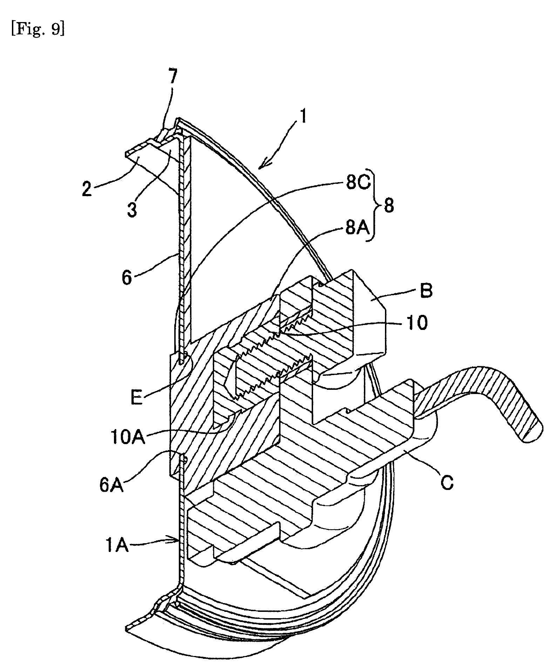

Further, the protective cover 1 may be configured such that a through hole 6A as illustrated in the perspective vertical cross-sectional view of Fig. 8 is formed in the disc portion 6 illustrated in the perspective vertical cross-sectional view of Fig. 2 or a through hole 6A as illustrated in the perspective vertical cross-sectional view of Fig. 9 is formed in the disc portion 6 illustrated in the perspective vertical cross-sectional view of Fig. 6, and a wrap-around portion 8C extending radially outward on the inner surface side of the cup-shaped main part 1A through the through hole 6A in the disc portion 6 is formed on the sensor holder part 8.

The protective covers 1 illustrated in Figs. 8 and 9 have an endless seal body E intervening between the cup-shaped main part 1A and the sensor holder part 8 around the through hole 6A. The protective covers 1 may not have the seal body E.

However, in either of the protective covers 1, the thermoset resin adhesive intervenes between the cap part 1A or the cylindrical part 1B as the metallic component and the sensor holder part 8 as the plastic component.

### <Comparison test of separation strength>

A dumbbell test specimen was fabricated to conduct evaluation test of adhesion strength. The results will be described below.

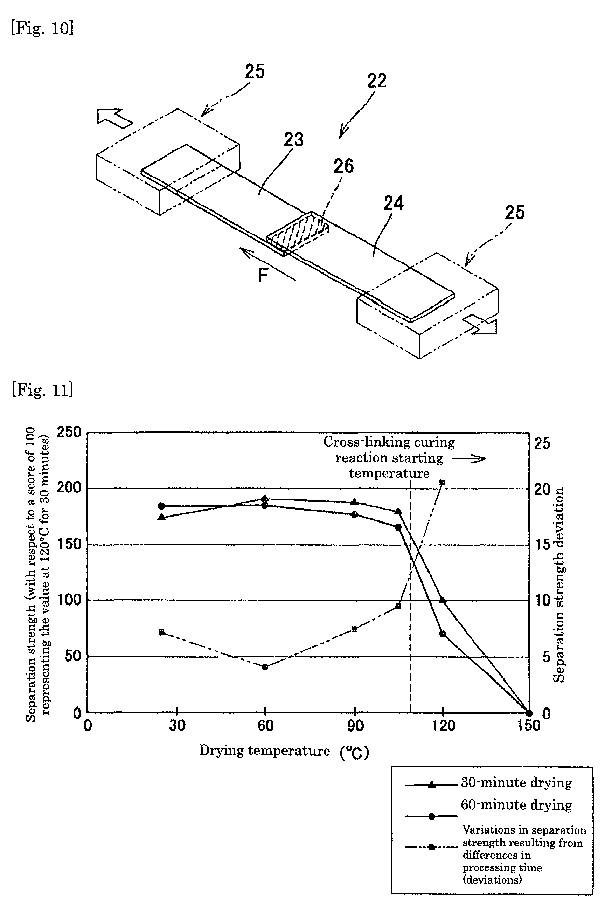

First, a SUS430 metal plate for the metallic component was processed to fabricate a metallic component plate 23 (25 mm wide, 80 mm long, and 2 mm thick) illustrated in the schematic perspective view of Fig. 10.

Next, a phenol-based thermoset resin adhesive was applied to the surface of the metallic component plate 23 on one side, with a width of about 10 mm relative to a longitudinal direction F. Then, the metallic component plate was placed and left at rest in a reaction container at temperatures of 25°C, 60°C, 90°C, 105°C, 120°C, and 150°C for 30 or 60 minutes to dry and completely remove organic solvents (methyl ethyl ketone, methyl isobutyl ketone, and methanol) in the thermoset resin adhesive, thereby forming the thermoset resin adhesive layer 26.

Next, the metallic component plate 23 was set in a predetermined insert molding die, and a molten plastic material (raw ingredient: PA12 or the like) at 270°C was injected into the molding die to mold a plastic component plate 24 almost the same in shape as the metallic component plate 23 illustrated in Fig. 10.

Next, the plastic component plate 24 was subjected to thermal curing treatment at 150°C which is higher than the cross-linking reaction starting temperature to cause the cross-linking reaction and curing reaction of the thermoset resin adhesive layer 26, thereby obtaining an adhesion strength evaluation dumbbell test specimen 22 illustrated in Fig. 10.

The obtained adhesion strength evaluation dumbbell test specimen 22 was subjected to tensile shear testing by a precision universal tester 25 at which the specimen was drawn in the directions of the both ends under JISK6850 test conditions to inspect the force by which the thermoset resin adhesive layer 26 was broken, and measured the separation strengths. Fig. 11 shows the measurement results of the separation strengths. The separation strengths in Fig. 11 are provided with respect to a score of 100 representing the value of separation strength at a drying temperature of 120°C for a drying time of 30 minutes. Fig. 11 also shows deviations in the separation strength resulting from the differences in the drying time by a two-dot chain line.

The step of fabricating the adhesion strength evaluation dumbbell test specimen 22 conforms to manufacturing method of the protective cover having the sensor holder part of the present invention. Accordingly, the obtained separation strengths are considered to be equivalent to the separation strengths of the protective cover of the present invention fabricated in the same way.

It can be seen from the results shown in Fig. 11 that the separation strength started to become lower when the drying temperature exceeded about 105°C, and decreased significantly at a drying temperature of 120°C or so.

The inventors of the present invention have examined the cause of the reduction in separation strength. The separation strength decreased until the adhesion was lost at a drying temperature of 150°C. Accordingly, the inventors have recognized that there was a possibility that, when the drying temperature became higher, the adhesive caused curing reaction and decreased the reaction groups, thereby failing to join with the plastic.

The inventors thus have dried the phenol-based thermoset resin adhesive applied to the surface of the metallic component under the temperature conditions: 1) air-drying at room temperature; 2) drying at 90°C for 10 minutes; and 3) baking at 150°C for 10 minutes, and inspected whether the adhesive could be removed by a methyl ethyl ketone (MEK) solvent under each of the conditions. The adhesive generally dissolves in the MEK solvent, but the adhesive having caused cross-linking reaction and denautured due to thermal curing does not dissolve in the MEK solvent. Accordingly, whether the adhesive is thermally cured can be verified by checking whether the adhesive can be removed by the MEK solvent.

As a result, the adhesive was removed by the MEK solvent in both of the air-dried specimen and the 90°C-dried specimen, whereas the adhesive was not removed by the MEK solvent in the 150°C-processed specimen and thus the adhesive was already cured. Since the processing time was short in the 150°C-processed specimen, the adhesive was not fully cured but semi-cured in the 150°C-processed specimen.

From the foregoing findings, it is estimated that the phenomenon of reduction in the separation strength at 105°C or so was caused by thermal curing of the thermoset resin adhesive applied to the surface of the metallic component.

In fact, as seen from the results shown in Fig. 11, the separation strengths of the protective cover obtained by drying at 25 to 105°C were about 1.7 to 1.9 times higher than those obtained by drying at 120°C regardless of the processing time. Therefore, the joint strength of the adhesive could be significantly improved.

In addition, in the case of drying at 25 to 105°C, the temperature environment became lower than the case of drying at a high temperature adjusted to 120°C or the like, which produces the advantage of facilitating stable mass processing.

Further, it can be seen from the results of Fig. 11 that the separation strength deviation became larger at drying temperatures higher than 105°C, and the influence of the drying temperature on the change in strength became larger.

Specifically, the value of the deviation at the 120°C processing was about five times higher than that at the 60°C processing. This indicates that the cross-linking curing reaction became more active at higher temperatures, and the curing reaction state largely varied depending on the drying time.

That is, it is suggested that drying at as high temperature as 120°C could contribute to improvements in productivity such as shortening of the processing time, but it is difficult to control the drying temperature and the drying time, and it is inevitable that variations in the adhesion strength among the products will increase due to the fluctuations in temperature in a drying device and the differences in timing between introduction into and removal from the drying device at the time of mass processing.

In contrast, when the thermoset resin adhesive is dried at a drying temperature lower than the temperature at which the adhesive starts cross-linking reaction such as 25 to 105°C, the separation strength deviation becomes smaller to significantly suppress variations in the adhesion strength among the products in mass-processed batches and variations in the adhesion strength among the products in each of the batch.

The tensile shear adhesion strengths of the adhesion strength evaluation dumbbell specimen at drying temperatures of 25 to 105°C were 8 to 11 N/mm².

Meanwhile, the tensile shear adhesion strengths of the adhesion strength evaluation dumbbell specimen at drying temperatures of 120°C for a drying time of 30 minutes were generally less than 5N/mm². Accordingly, the protective cover obtained by the manufacturing method of the present invention has been found to improve the adhesion strength more than the conventional ones.

### Reference Signs List

- 1: Protective cover
- 1A: Cap part (metallic component)
- 1B: Cylindrical part (metallic component)
- 2: First cylindrical portion
- 3: Second cylindrical portion
- 4: Annular portion
- 5: Third cylindrical portion
- 6: Disc portion
- 6A: Through hole
- 7: Seal body (elastic component)
- 8: Sensor holder part (plastic component)
- 8A: Base portion
- 8B: Step covering portion
- 8C: Wrap-around portion
- 9: Concave portion
- 10: Nut
- 10A: Peripheral groove
- 11: Bearing device
- 12: Inner ring
- 12A: Inner ring track surface
- 13: Outer ring
- 13A: Outer ring track surface
- 14: Rolling element
- 15: Seal member
- 16: Magnetic encoder
- 17: Support member
- 18: Fixed die
- 19: Movable die
- 20: Gate
- 21: Support shaft
- 22: Adhesion strength evaluation dumbbell test specimen
- 23: Metallic component plate
- 24: Plastic component plate
- 25: Precision universal tester
- 26: Thermoset resin adhesive layer
- A: Thermoset resin adhesive
- B: Attachment bolt
- C: Magnetic sensor
- D: Step
- E: Seal body
- F: Longitudinal direction

## Claims

1. A manufacturing method of a protective cover for use in a bearing device including: an inner ring with an inner ring track surface on an outer peripheral surface; an outer ring with an outer ring track surface on an inner peripheral surface; a bearing having a rolling element rolling between the inner ring track surface and the outer ring track surface; a magnetic encoder that is positioned at one axial end of the bearing, fixed to the inner ring, and has N and S poles alternately arranged at regular intervals in an circumferential direction; and a magnetic sensor that is opposed to the magnetic poles of the magnetic encoder to detect rotation of the magnetic encoder, the protective cover having a metallic component press-fitted into the outer ring and a plastic component forming a sensor holder part holding the magnetic sensor wherein
the manufacturing method comprises:
an adhesive application step of applying a thermoset resin adhesive to a surface of the metallic component including a joining surface relative to the plastic component;
a natural drying step of evaporating a solvent contained in the adhesive by natural drying or a drying and solidification step of evaporating the solvent contained in the adhesive under a temperature condition at a temperature lower than a temperature at which the adhesive starts cross-linking reaction;
an injection molding step of placing the metallic component having undergone the natural drying step or the drying and solidification step as an insert in an injection molding die and injecting a molten material for the plastic component from a gate into a cavity of the molding die; and
a thermal curing step of applying thermal curing treatment to the adhesive at a temperature equal to or higher than the temperature at which the adhesive starts cross-linking reaction.
